# EUROPÄISCHE PATENTSCHRIFT

(11) **EP 3 159 671 B1**
(45) Veröffentlichungstag und Bekanntmachung des Hinweises auf die Patenterteilung: **11.07.2018**
(21) Anmeldenummer: 15190408.3
(22) Anmeldetag: 19.10.2015
(51) Int. Cl.: G01N 15/08, G01N 33/24, G01N 7/00, E02D 1/02

(54) **UNTERGRUNDDURCHLÄSSIGKEITSMESSGERÄT**
BASE PERMEABILITY MEASURING DEVICE
APPAREIL DE MESURE DE LA PERMEABILITE DU SOUS-SOL

(43) Veröffentlichungstag der Anmeldung: 26.04.2017
(73) Patentinhaber: HZ-Dr. Hans Jürgen Hahn und Dr. Thomas Zumbroich GbR, 53111 Bonn (DE)
(72) Erfinder: Zumbroich, Thomas, Prof. Dr., 53227 Bonn (DE); Hahn, Hans Jürgen, PD Dr., 76829 Landau (DE)
(74) Vertreter: Patentanwälte Bauer Vorberg Kayser

(56) Entgegenhaltungen:
- DE-A1- 4 319 976
- FR-A1- 2 576 415
- US-A- 2 376 878
- US-A- 5 548 991

## Beschreibung

Die Erfindung betrifft ein Untergrunddurchlässigkeitsmessgerät, welches geeignet ist zur Bestimmung der Kolmation von Sedimenten und ein Verfahren zur Bestimmung der Kolmation von Sedimenten.

Die Durchlässigkeit bzw. die Versickerungsfähigkeit von Untergründen wird unter anderem maßgeblich durch Kolmation beeinflusst. Kolmation bezeichnet die Verstopfung feiner Lückensystem in den Sanden, Kiesen und Schottern der Gewässersohle und die Verminderung des Wasserflusses in den Sedimenten.

Jedes Jahr erodieren in Europa 970 Millionen Tonnen Boden. Der größte Teil dieser Feinsedimente wird in die Fließgewässer eingetragen. Auch durch Abschläge aus der Kanalisation bei Starkregenereignissen werden in Siedlungsgebieten und entlang großer versiegelter Flächen (wie z.B. Autobahnen) partikuläre Schmutzstoffe organischer und anorganischer Art in Bäche und Flüsse eingetragen. Auch dies führt zu Kolmation.

Dort verstopfen sie die feinen Lückensysteme in den Sanden, Kiesen und Schottern der Gewässersohle, die sogenannte hyporheische Zone. Damit wird der Wasserfluss und -austausch zwischen Oberflächenwasser, hyporheischer Zone und Grundwasser verhindert.

Kolmation ist unter anderem auch ein Problem für Bio-Kläranlagen und Versickerungsanlagen. Auch durch Wurzelwachstum können die Bodenporen verstopfen (kolmatieren). Eine weitere Form ist die Verschlämmung der Bodenkrume durch Stark- oder Dauerregen als Problemfall der Landwirtschaft.

Bei der Untersuchung und Bewertung kolmatierter Fließgewässer wird die hyporheische Zone meist völlig außer Acht gelassen, was meist zu einem diffusen Ergebnis führt: Obwohl Struktur und Wasserqualität gut oder sehr gut sind, zeigt die ökologische Bewertung nur einen mittelmäßigen Zustand an ("allgemeine Degradation"). Da Kolmation bei all jenen Fließgewässern auftritt, die in landwirtschaftlich genutzten Regionen und durch Siedlungsgebiete verlaufen, dürfte der größte Teil der europäischen Bäche und Flüsse davon betroffen sein.

Derzeit gibt es jedoch keine standardisierten Verfahren zur Erfassung und Bewertung der Kolmation von Fließgewässersedimenten. Soweit überhaupt berücksichtig, wird die Kolmation geschätzt. Methoden zur quantitativen Erfassung der Kolmation existieren bisher nicht.

Es sind Messgeräte und Verfahren bekannt, über die zwar die Durchlässigkeit von Untergründen bestimmbar ist, diese eignen sich jedoch nicht zur Bestimmung der Kolmation. Beispielsweise beschreibt die FR 2 576415 ein Messgerät zur Bestimmung der Permeabilität von Boden- und insbesondere Formationen mit sehr geringer Permeabilität mittels einer pulsierenden Druckmessung. In der US 5,548,991 wird ein Injektionselement offenbart, mit dem ebenfalls die Durchlässigkeit des Erdreichs bestimmbar ist. Das Injektionselement wird dabei mithilfe eines Schmiermittels in den Untergrund eingebracht. Nach Entfernen des Injektionselements wird das Bohrloch mit einem Dichtmittel verschlossen. Ferner ist aus der DE 43 19 976 A1 ein Verfahren und eine Anordnung zur Bestimmung der Durchlässigkeit eines durch eine Bohrung aufgeschlossenen Bodenkörpers bekannt, wobei der Bodenkörper mit Druck beaufschlagt wird und die eintretenden Druckänderungen ausgewertet werden. Weiterhin ist aus der US 2,376,878 ein Verfahren zur Bestimmung der Permeabilität von Formationen bekannt, in die ein Bohrloch gebohrt wurde.

Die bisher üblichen Ansätze zur Erfassung der inneren Kolmation lassen sich in qualitative Verfahren, messtechnische Verfahren und Berechnungsverfahren unterteilen. Zu den qualitativen Verfahren gehören beispielsweise die visuelle Beurteilung, die sogenannte Stiefelprobe und die optische Bewertung an trockenen Teilen der Sohle. Alle diese qualitativen Verfahren haben den Nachteil, dass sie sehr subjektiv sind und insofern einen objektiven Vergleich verschiedener Beurteilungen nicht zulassen.

Die messtechnischen Verfahren beinhalten Sedimentfallen, Siebanalysen, Grundwasserstandsmessungen und Abflussmessungen. Sedimentfallen lassen nur eine qualitative Beurteilung zu, die wiederum abhängig ist vom Versuchsaufbau. Siebanalysen sind aufwendig und eine abgestufte Beurteilung der Kolmation ist kaum möglich. Die Beurteilung des Grundwasserstands lässt ebenfalls keine differenzierte Bewertung der Kolmation zu, während bei Abflussmessungen die Bewertung der Kolmation nicht eindeutig ist.

Berechnungsverfahren basieren auf der Durchlässigkeit in Funktion der Zeit. Der Aufwand ist sehr groß und die Messung vieler Eingabeparameter ist erforderlich.

Eine Methodik zur Erhebung der inneren Kolmation unter Wasser beinhaltet das Einbringen eines rund 33 cm langen Stahlstiftes in den Boden bzw. die Kiessohle. Der Stahlstift reicht dabei 16,5 cm in den Boden hinein. Eine Schnur wird mit einer Schlaufe um den Stift gelegt. Am anderen Ende der Schnur ist eine Federwaage befestigt. Mit zunehmender Kraft wird rechtwinklig zum Stift gezogen, bis sich der Stift aus dem Kies löst. Die Kraft die dazu notwendig ist, kann auf der Federwaage abgelesen werden. Nachteilig bei diesem Verfahren ist u.a., dass der Widerstand von nicht sichtbaren Gegebenheiten im Boden abhängig ist. Auch hat sich gezeigt, dass zahlreiche Messungen notwendig sind, um ein relativ objektives Ergebnis zu erreichen.

Die Versickerungsfähigkeit des Untergrundes ist auch bei Baugrunderkundungen oder bei Durchlässigkeitsmessungen in Grundwasserleitern sowie Böden von Bedeutung. Über die oben genannten Verfahren hinaus sind auch für diese Anwendungsbereiche in terrestrischen Böden keine Messgeräte oder keine einfach anwendbaren Verfahren bekannt. Beispielsweise ist es bei der Herstellung von Versickerungsmulden, Rigolen oder Retentionsbodenfilterbecken notwendig, die Versickerungsfähigkeit des Bodens bzw. des Untergrundes im Vorfeld sicher zu bestimmen. Nur wenn Regenwasser in ausreichender Geschwindigkeit versickern kann, ist eine solche technische Versickerungsanlage genehmigungsfähig.

Die Aufgabe der vorliegenden Erfindung besteht darin, ein Untergrunddurchlässigkeitsmessgerät zu schaffen, mit dem der Grad der inneren Kolmation zuverlässig und wiederholbar gemessen werden kann. Weiterhin sollen beispielsweise auch die Untersuchung von Baugrund hinsichtlich der Versickerungsfähigkeit des Untergrunds oder auch Durchlässigkeitsmessungen in Grundwasserleitern und Böden möglich sein. Das Untergrunddurchlässigkeitsmessgerät soll dabei robust und einfach aufgebaut, mögliche Fehlerquellen sollen minimiert sein. Die Herstellung des Untergrunddurchlässigkeitsmessgerätes soll darüber hinaus kostengünstig und die Wartung und Instandhaltung mit geringem Aufwand durchführbar sein. Weiterhin ist es Aufgabe der vorliegenden Erfindung, ein Verfahren zur Messung der inneren Kolmation vorzuschlagen, welches insbesondere mit dem erfindungsgemäßen Untergrunddurchlässigkeitsmessgerät durchführbar ist.

Erfindungsgemäß wird die Aufgabe durch ein Untergrunddurchlässigkeitsmessgerät gelöst, gemäß Anspruch 1. Weiterhin wird die Aufgabe durch ein Verfahren zur Bestimmung der Kolmation von Sedimenten gelöst, gemäß Anspruch 11. Der Begriff Untergrund umfasst im Sinne der Erfindung sämtliche Untergründe, insbesondere Lockersedimente (Bachsedimente), Böden, Geschiebe und sonstige geologischen Untergründe.

Die Erfinder haben erkannt, dass ein belastbares Verfahren zur quantitativen Messung der Kolmation die Durchlässigkeit der Sedimente für Wasser ermitteln können muss. Das Ergebnis muss zu einer Art Parameter führen, der mit dem Durchlässigkeitsbeiwert für Grundwasserleiter (Kf-Wert) vergleichbar ist.

Erfindungsgemäß erfolgt die Messung der Durchlässigkeit von Sedimenten durch die gezielte Intrusion bzw. Injektion von Wasser, mittels eines Injektionselementes in das zu untersuchende Sediment.

Der Begriff Überdruck bezeichnet im Sinne der Erfindung den Zustand an der oder den Austrittsöffnungen. Ein gewisser Überdruck ist vorgesehen, um das Wasser von innen nach außen durch die Austrittsöffnungen zu leiten. Die Höhe des Druckniveaus ist insbesondere vom Sediment, aber auch von der gewünschten Zeitdauer der Injektion abhängig. Erfolgt das Einleiten über einen langen Zeitraum, kann ein minimaler Überdruck ausreichen. Bei bestimmten Sedimenten kann es sogar möglich sein, das Wasser ohne Überdruck, also mit Umgebungsdruck einzuleiten.

Das Injektionselement ist vorzugsweise durch eine Lanze aus einem widerstandsfähigen, möglichst starren Material gebildet. Dies ist insbesondere deshalb sinnvoll, weil die Lanze in das zu untersuchende Sediment eingebracht werden muss. Je nach Zusammensetzung des Sediments kann das Injektionselement eingedrückt, eingeschlagen oder eingedreht bzw. gebohrt werden. Entsprechend kann die Lanze weitere Elemente aufweisen, die ein Einbringen in den Boden erleichtern. Hierzu zählt bei hilfsweise ein Schlaggewicht, welches fest an der Lanze befestigt ist, oder eine besonders widerstandsfähige Spitze am freien Ende. Denkbar ist auch relativ grobes Außengewinde, das das Eindrehen bzw. Einschrauben in den Untergrund ermöglicht.

Alternativ kann das Injektionselement beispielsweise auch durch einen Schlauch gebildet sein, der auf bzw. in ein Flussbett gelegt wird und dort solange verbleibt, bis er sich aufgrund von Sedimentation im Untergrund befindet.

Unabhängig von der Ausbildung des Injektionselementes beispielsweise als Lanze oder Schlauch kann das Injektionselement erfindungsgemäß auch in den Untergrund eingegraben werden.

In ihrem Innern weist das Injektionselement einen wasserleitenden Hohlraum auf, wobei am freien Ende des Injektionselements mehrere über den Außenumfang des Injektionselements verteilte Austrittsöffnungen vorgesehen sind. Durch den Hohlraum wird das Wasser zu den Austrittsöffnungen geleitet und in das umgebende Sediment injiziert.

Eine Druckerhöhungsvorrichtung bewirkt dabei eine Erhöhung des Druckniveaus des zu injizierenden Wassers. Die Druckerhöhungsvorrichtung kann dabei durch eine einfache manuell angetriebene Pumpe gebildet sein, denkbar ist aber auch eine elektrisch oder motorisch angetriebene Pumpe.

Das zu injizierende Wasser kann entweder aus der Umwelt, beispielsweise aus einem Gewässer entnommen werden, erfindungsgemäß kann aber auch ein Behälter vorgesehen sein, in dem Wasser bevorratet ist. Letzteres hat den Vorteil, dass das zu injizierende Wasser bestimmten definierten Anforderungen entsprechen kann. Bei Verwendung eines Behälters kann dieser beispielsweise mit einer Pumpe in Verbindung stehen, über die das Druckniveau innerhalb des Behälters auf das gewünschte Niveau erhöht werden kann. Über ein Ventil, vorzugsweise ein Hand- oder Magnetventil wird die Flüssigkeit über eine Auslassleitung aus dem unter Druck stehenden Behälter in das Injektionselement gefördert. Alternativ kann innerhalb des Behälters eine Tauchpumpe oder auch eine Kreiselpumpe in der Auslassleitung vorgesehen sein.

Vorteilhafterweise ist der Behälter mit Gurten versehen, die es erlauben, diesen beispielsweise auf dem Rücken zu tragen.

Die mehrerer, über die Außenfläche des Injektionselements verteilten Auslassöffnungen haben einen genormten Durchmesser. Grundsätzlich ist der Durchmesser in Abhängigkeit des zu untersuchenden Sediments zu wählen, Größenordnungen von 1 mm bis 5 mm, vorzugsweise 1 mm bis 2 mm haben sich als sinnvoll erwiesen. Je nach Sediment können aber Durchmesser von weniger als 1 mm zielführend sein.

Um eine definierte Zeitdauer der Wasserinjektion zu gewährleisten, kann erfindungsgemäß ein zeitgesteuertes Ventil vorgesehen sein. Alternativ kann die Zeitdauer der Wasserinjektion über eine externe Stoppuhr gemessen werden.

Bei der erfindungsgemäßen Messung bzw. dem erfindungsgemäßen Verfahren sind vorzugsweise drei Parameter zu berücksichtigen:
1.) der erforderliche Einspritzdruck
2.) die Zeit, in der
3.) eine bestimmte Wassermenge in das Sediment injiziert wird

Zwei dieser drei Parameter werden konstant gehalten, der dritte gemessen. Dieser entspricht dann der jeweiligen Durchlässigkeit der Sedimente. Über die Eichung mit Sedimenten definierter Durchlässigkeit wird der Abgleich mit eingeführten Messgrößen zur Sedimentcharakterisierung, z.B. Kf-Wert in m/s, möglich. Dabei kann es sinnvoll sein, wenn es sich bei dem Injektionselement um eine Lanze handelt, die Eindringtiefe der Lanze stets gleich ist. Aus diesem Grund weist die Lanze vorteilhafterweise eine Skalierung oder Farbindikatoren auf ihrer Außenseite auf. Beispielsweise kann der Bereich des freien Endes, ausgehend von der Spitze der Lanze gut sichtbar gefärbt sein. Beim Einschlagen muss dann lediglich darauf geachtet werden, dass der gefärbte Bereich in das Erdreich eindringt. Da die Lanze auch unter Wasser verwendbar sein soll, sollte die Farbgebung so gewählt werden, dass sie auch durch Wasser hindurch gut erkennbar ist. Alternativ oder zusätzlich kann auch ein Muster verwendet werden, wenn dies die Sichtbarkeit erhöht.

Soll der Einfluss auf das umgebende Material des Sediments möglichst gering gehalten werden, ist erfindungsgemäß vorgesehen, das Injektionselement möglichst langsam in den Untergrund einzubringen. Beispielsweise kann es mit einem Gewicht oder mit Federkraft beaufschlagt und zum Beispiel mithilfe eines Dreibeins langsam in den Untergrund gedrückt werden.

Bei der Messung werden Einspritzdruck (p) und Zeit (t) vorteilhafterweise konstant gehalten und die injizierte Wassermenge (V) gemessen. In einer Versuchsanordnung hat sich folgende Vorgehensweise mit den genannten Werten als sinnvoll erwiesen:
1.) in einem Wassergefäß wird ein Druck von 1 bar eingestellt und
2.) über einen Zeitraum von 5 Sekunden
3.) Wasser in das Sediment injiziert und diese Wassermenge elektronisch gemessen.

Daraus ergibt sich bei p = 1 bar die Fließrate (Q = ml/5s bzw. m³/s), die die Durchlässigkeit widergibt.

Der Druck, mit dem das Wasser in das Sediment eingebracht wird, kann je nach Anwendungsfall auch deutlich höher oder deutlich geringer sein. Beispielsweise können Messungen zu sinnvollen und belastbaren Ergebnissen führen, bei denen der Druck deutlich weniger als 1 bar beträgt. Messungen mit geringerem Druck führen auch zu geringerem Einfluss auf den das Injektionselement umgebende Sediment.

Je größer das eingebrachte Wasservolumen, d. h. die Fließrate, desto durchlässiger ist das Sediment und umso geringer die Kolmation. Der Arbeitsdruck und die Injektionszeit lassen sich bei Bedarf anpassen.

Grundsätzlich ist auch die Messung eines anderen Parameters als der Fließrate möglich. Dazu könnte z.B. das injizierte Wasservolumen und ein weiterer Parameter (Einspritzdruck oder Zeit) konstant gehalten und entweder die Zeit oder der Druckverlust gemessen werden.

Zusammen mit dem Injektionselement können zusätzliche Sensoren in das Sediment eingebracht werden, z.B. zur Messung der Temperatur, der Leitfähigkeit, der Lokalisation der Messstelle (GPS) oder weiterer Parameter.

Die im oben beschriebenen Verfahren dargestellten mechanischen Kompartimente lassen sich durch elektronische Bauteile ergänzen bzw. substituieren. Eine digitale Erfassung und automatisierte Weiterverarbeitung ist möglich.

Das oben beschriebene Verfahren ist grundsätzlich auch für den Einsatz im marinen Milieu geeignet (z.B. Hafenbecken und Off Shore). Außerdem lassen sich Messungen in Stillgewässern, wie Seen, Weihern und Teichen durchführen.

Durch stationären Dauerbetrieb von Injektionselementen in Gewässern lassen sich Langzeitstudien der Kolmation anstellen. Ein Einsatz von Datenloggern mit automatischer Übermittlung der Messergebnisse an ein digitales System ist möglich.

In einer besonders vorteilhaften Ausführungsvariante sind sämtliche Elemente, die elektrische Energie benötigen derart ausgelegt, dass sie über 9V oder 12 V oder 24 V betrieben werden können. Dies minimiert die Größe von Batterien oder Akkus und ermöglicht insbesondere auch eine Energieversorgung über Solarelemente, was bei langen Feldmessungen in der Natur besonders hilfreich ist.

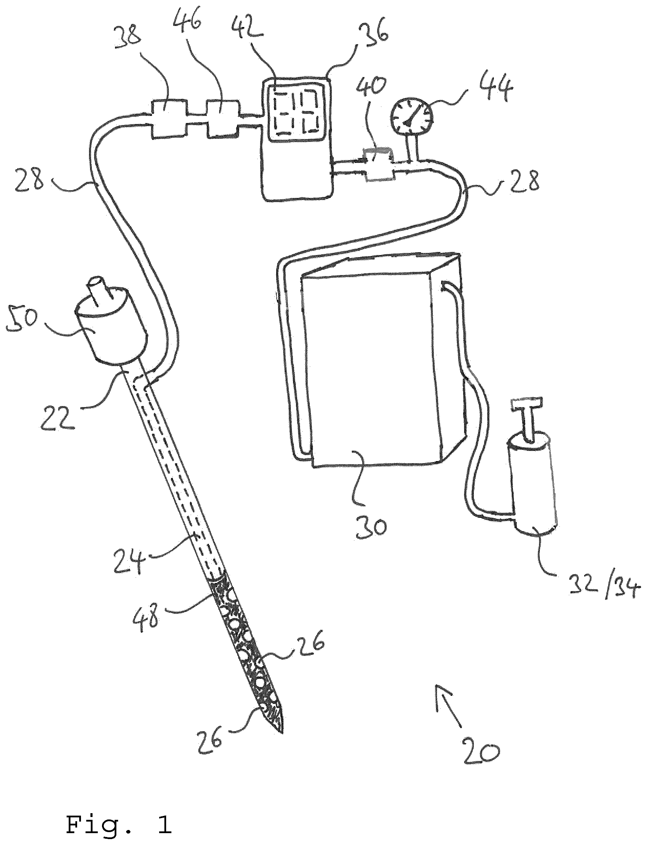

Die Erfindung wird anhand der nachfolgenden Figur näher erläutert. Diese dabei nur beispielhaft zu verstehen, insbesondere sind die Größenverhältnisse nicht maßstabsgetreu. Die Figur stellt nur ein Ausführungsbeispiel der Erfindung dar.

Die einzige Figur zeigt ein Untergrunddurchlässigkeitsmessgerät 20, welches zur Bestimmung der Kolmation von Sedimenten geeignet ist. Dieses weist ein Injektionselement 22, im gezeigten Ausführungsbeispiel ausgeführt als Lanze, auf, welche in ein Sediment einführbar ist.

Im Inneren des Injektionselements 22 ist ein Hohlraum 24 ausgebildet, durch den Wasser zu Austrittsöffnungen 26 geleitet werden kann. Die Austrittsöffnungen 26 sind im Bereich des freien Endes angeordnet und gleichmäßig über den Außenumfang des Injektionselementes 22 verteilt.

Das Injektionselement 22 ist im gezeigten Ausführungsbeispiel mit einer Leitung 28 verbunden, die letztendlich in einem Behälter 30 endet. Innerhalb des Behälters 30 ist Wasser angeordnet, das in das Sediment injiziert werden soll.

Eine Druckerhöhungsvorrichtung 32 dient der Erhöhung des Druckniveaus mit dem das Wasser in das Sediment injiziert wird. Im gezeigten Ausführungsbeispiel ist die Druckerhöhungsvorrichtung 32 als manuelle Pumpe 34 ausgeführt, über die das Druckniveau im Behälter 30 erhöht werden kann.

Das Untergrunddurchlässigkeitsmessgerät 20 weist weiterhin ein Messgerät 36 auf, über das eine Messung aus der Gruppe injiziertes Wasservolumen, Zeitraum der Wasserinjektion oder Druckniveau der Wasserinjektion durchführbar ist. Entsprechend sind die dafür notwendigen Elemente, wie beispielsweise ein Volumenmessgerät 38, ein Druckmessgerät und/oder eine Uhr vorhanden.

Ein zeitgesteuertes Ventil 40 öffnet den Zulauf in das Injektionselement 22 für eine definierte Zeitdauer. Dieses Ventil 40 kann durch ein Handventil oder auch ein Magnetventil mit Zeiteinstellung gebildet sein.

Ein Anzeigegerät 42 dient der Anzeige gemessener Werte. Über das das Anzeigegerät 42 können alle relevanten Daten angezeigt werden, zum Beispiel das gemessene Druckniveau, das injizierte Wasservolumen oder der Zeitraum der Wasserinjektion. Insbesondere kann über das Anzeigegerät auch die zu messende Zeitdauer eingestellt werden.

Das Anzeigegerät 42 kann extern oder als integraler Bestandteil des Messgerätes ausgeführt sein.

Im gezeigten Ausführungsbeispiel ist eine zusätzliche Druckanzeige 44 vorgesehen.

Der definierte Überdruck bzw. das gewünschte Druckniveau kann mit Hilfe eines einstellbaren Überdruckventils 46 gewährleistet werden.

Erkennbar ist, dass das Injektionselement 22 einen farbigen Bereich 48 aufweist, der eine gewünschte Eindringtiefe in das Sediment anzeigt. Auf diesen farbigen Bereich kann verzichtet werden, er kann aber auch durch eine Skalierung, beispielsweise mit Zentimeteranzeige, ersetzt werden.

Um ein Einbringen des Injektionselements 22 in das Sediment zu erleichtern, ist ein Schlaggewicht 50 vorgesehen. Alternativ ist auch ein relativ großes Außengewinde denkbar, über dass das Injektionselement 22 in das Sediment einschraubbar ist.

Mithilfe des erfindungsgemäßen Untergrunddurchlässigkeitsmessgerätes und des erfindungsgemäßen Verfahrens ist es erstmals möglich, die Kolmation von Fließgewässersedimenten zu erfassen.

## Patentansprüche

1. Untergrunddurchlässigkeitsmessgerät (20) geeignet zur Bestimmung der Kolmation von Sedimenten, aufweisend
- ein Injektionselement (22) zum Einbringen in ein zu untersuchendes Sediment aufweisend:
- mehrere gleichmäßig über den Außenumfang des Injektionselements (22) verteilte Austrittsöffnungen (26), wobei die Austrittsöffnungen (26) im Bereich des freien Endes des Injektionselements (22) angeordnet sind und einen Durchmesser im Bereich von 1 - 5 mm aufweisen, sowie
- einen Hohlraum (24) zur Leitung von Wasser zu den Austrittsöffnungen (26),
- eine Druckerhöhungsvorrichtung (32), über die das Wasser mit Überdruck durch das Injektionselement (22) und die Austrittsöffnungen (26) in das das Injektionselement (22) umgebende Sediment injizierbar ist.

2. Untergrunddurchlässigkeitsmessgerät (20) nach Anspruch 1, **dadurch gekennzeichnet, dass** die Druckerhöhungsvorrichtung (32) derart ausgeführt ist, dass zumindest ein definiertes Druckniveau erzeugbar ist.

3. Untergrunddurchlässigkeitsmessgerät (20) nach Anspruch 1 oder Anspruch 2, **dadurch gekennzeichnet, dass** mindestens ein Messgerät (36) für mindestens eine Messung aus der Gruppe injiziertes Wasservolumen, Zeitraum der Wasserinjektion oder Druckniveau der Wasserinjektion vorgesehen ist.

4. Untergrunddurchlässigkeitsmessgerät (20) nach Anspruch 3, **dadurch gekennzeichnet, dass** ein Anzeigegerät (42) zur Anzeige der gemessenen Werte vorgesehen ist.

5. Untergrunddurchlässigkeitsmessgerät (20) nach einem der Ansprüche 1 bis 4, **dadurch gekennzeichnet, dass** ein mit dem Injektionselement (22) in Fließverbindung stehender Behälter (30) für das zu injizierende Wasser vorgesehen ist.

6. Untergrunddurchlässigkeitsmessgerät (20) nach einem der Ansprüche 3 bis 5, **dadurch gekennzeichnet, dass** ein zeitgesteuertes Ventil (40) vorgesehen ist, über das die Zeitdauer der Wasserinjektion einstellbar ist.

7. Untergrunddurchlässigkeitsmessgerät (20) nach einem der Ansprüche 1 bis 6, **dadurch gekennzeichnet, dass** die Druckerhöhungsvorrichtung (32) durch eine manuell zu bedienende Pumpe (34) gebildet ist.

8. Untergrunddurchlässigkeitsmessgerät (20) nach einem der Ansprüche 1 bis 7, **dadurch gekennzeichnet, dass** die Druckerhöhungsvorrichtung (32) durch eine elektrisch betriebene bedienende Pumpe gebildet ist.

9. Untergrunddurchlässigkeitsmessgerät (20) nach einem der Ansprüche 1 bis 8, **dadurch gekennzeichnet, dass** das Injektionselement (22) als Lanze ausgeführt ist.

10. Untergrunddurchlässigkeitsmessgerät (20) nach einem der Ansprüche 1 bis 8, **dadurch gekennzeichnet, dass** das Injektionselement (22) als Schlauch ausgeführt ist.

11. Verfahren zur Bestimmung der Kolmation von Sedimenten, **gekennzeichnet durch** die Verfahrensschritte
- Einbringen eines Injektionselements (22) mit einem Hohlraum (24) zur Leitung von Wasser zu mehreren gleichmäßig über den Außenumfang verteilten Austrittsöffnungen (26), die im Bereich des freien Endes des Injektionselements (22) angeordnet sind und einen Durchmesser im Bereich von 1-5 mm aufweisen, in ein zu untersuchendes Sediment,
- Injizieren von Wasser mit Überdruck über das Injektionselement (22) und die Austrittsöffnungen (26) in das Sediment, unter Festlegen und Beibehalten zweier Parameter aus der Gruppe
d) injiziertes Wasservolumen,
e) Zeitraum der Wasserinjektion, oder
f) Druckniveau der Wasserinjektion,
- Ermitteln desjenigen Parameters a), b) oder c), der nicht festgelegt und beibehalten wurde.

12. Verfahren nach Anspruch 11, **gekennzeichnet durch** einen Vergleich des ermittelten Parameters mit Referenzwerten dieses Parameters, die zuvor für Sedimente mit einer definierten Durchlässigkeit ermittelt wurden.

13. Verfahren nach Anspruch 11 oder Anspruch 12, **dadurch gekennzeichnet, dass** das Druckniveau der Wasserinjektion weniger als 1 bar beträgt.

## Claims

1. A substrate permeability measuring device (20) suitable for determining the colmation of sediments, comprising
- an injection element (22) for insertion into a sediment to be examined, comprising:
- several outlet openings (26) uniformly distributed over the outer circumference of the injection element (22), the outlet openings (26) being disposed in the region of the free end of the injection element (22) and having a diameter in the range of 1 - 5 mm, and
- a cavity (24) for conducting water to the outlet openings (26),
- a pressure increasing device (32) via which the water can be injected with overpressure through the injection element (22) and the outlet opening (26) into the sediment surrounding the injection element (22).

2. The substrate permeability measuring device (20) according to claim 1, **characterized in that** the pressure increasing device (32) is configured in such a way that at least a defined pressure level can be generated.

3. The substrate permeability measuring device (20) according to claim 1 or claim 2, **characterized in that** at least one measuring device (36) for at least one measurement from the group injected water volume, period of time of the injection of water, or pressure level of the injection of water is provided.

4. The substrate permeability measuring device (20) according to claim 3, **characterized in that** a display device (42) for displaying the measured values is provided.

5. The substrate permeability measuring device (20) according to any one of the claims 1 to 4, **characterized in that** a container (30) for the water to be injected, which is in fluid communication with the injection element (22), is provided.

6. The substrate permeability measuring device (20) according to any one of the claims 3 to 5, **characterized in that** a time-controlled valve (40) is provided, by means of which the period of time of the injection of water can be adjusted.

7. The substrate permeability measuring device (20) according to any one of the claims 1 to 6, **characterized in that** the pressure increasing device (32) is formed by a pump (34) that can be operated manually.

8. The substrate permeability measuring device (20) according to any one of the claims 1 to 7, **characterized in that** the pressure increasing device (32) is formed by an electrically operated pump.

9. The substrate permeability measuring device (20) according to any one of the claims 1 to 8, **characterized in that** the injection element (22) is configured as a lance.

10. The substrate permeability measuring device (20) according to any one of the claims 1 to 8, **characterized in that** the injection element (22) is configured as a hose.

11. A method for determining the colmation of sediments, **characterized by** the method steps
- inserting, into a sediment to be examined, an injection element (22) with a cavity (24) for conducting water to several outlet openings (26), which are uniformly distributed over the outer circumference and are disposed in the region of the free end of the injection element (22) and have a diameter in the range of 1 - 5 mm,
- injecting water with overpressure through the injection element (22) and the outlet opening (26) into the sediment, while setting and maintaining two parameters from the group
d) injected water volume,
e) period of time of the injection of water, or
f) pressure level of the injection of water,
- determining the parameter a), b) or c) that was not set or maintained.

12. The method according to claim 11, **characterized by** a comparison of the determined parameter with reference values of that parameter that were previously determined for sediments with a defined permeability.

13. The method according to claim 11 or claim 12, **characterized in that** the pressure level of the injection of water is less than 1 bar.

## Revendications

1. Appareil de mesure de perméabilité de sous-sol (20) adapté pour déterminer le colmatage de sédiments, comprenant
- un élément d'injection (22) destiné à être introduit dans un sédiment à examiner, comprenant:
- une pluralité d'orifices de sortie (26) qui sont répartis régulièrement sur la circonférence extérieure de l'élément d'injection (22), dans lequel les orifices de sortie (26) sont disposés au niveau de l'extrémité libre de l'élément d'injection (22) et présentent un diamètre compris entre 1 et 5 mm, ainsi qu'
- une cavité (24) pour acheminer de l'eau vers les orifices de sortie (26),
- un dispositif d'augmentation de pression (32) au moyen duquel l'eau peut être injectée en surpression, à travers l'élément d'injection (22) et les orifices de sortie (26), dans le sédiment entourant l'élément d'injection (22).

2. Appareil de mesure de perméabilité de sous-sol (20) selon la revendication 1, **caractérisé par le fait que** ledit dispositif d'augmentation de pression (32) est réalisé de telle manière qu'au moins un niveau de pression définie peut être produit.

3. Appareil de mesure de perméabilité de sous-sol (20) selon la revendication 1 ou la revendication 2, **caractérisé par le fait que** l'on prévoit au moins un appareil de mesure (36) pour au moins une mesure parmi le groupe comprenant le volume d'eau injecté, la durée de l'injection d'eau ou le niveau de pression de l'injection d'eau.

4. Appareil de mesure de perméabilité de sous-sol (20) selon la revendication 3, **caractérisé par le fait que** l'on prévoit un appareil d'affichage (42) destiné à afficher les valeurs mesurées.

5. Appareil de mesure de perméabilité de sous-sol (20) selon l'une quelconque des revendications 1 à 4, **caractérisé par le fait que** l'on prévoit un récipient (30) pour l'eau à injecter, qui est en communication fluidique avec ledit élément d'injection (22).

6. Appareil de mesure de perméabilité de sous-sol (20) selon l'une quelconque des revendications 3 à 5, **caractérisé par le fait que** l'on prévoit une vanne (40) à commande temporisée qui permet de régler la durée de l'injection d'eau.

7. Appareil de mesure de perméabilité de sous-sol (20) selon l'une quelconque des revendications 1 à 6, **caractérisé par le fait que** ledit dispositif d'augmentation de pression (32) est constitué par une pompe (34) à actionner à la main.

8. Appareil de mesure de perméabilité de sous-sol (20) selon l'une quelconque des revendications 1 à 7, **caractérisé par le fait que** ledit dispositif d'augmentation de pression (32) est constitué par une pompe actionnée électriquement.

9. Appareil de mesure de perméabilité de sous-sol (20) selon l'une quelconque des revendications 1 à 8, **caractérisé par le fait que** ledit élément d'injection (22) est réalisé en tant que lance.

10. Appareil de mesure de perméabilité de sous-sol (20) selon l'une quelconque des revendications 1 à 8, **caractérisé par le fait que** ledit élément d'injection (22) est réalisé en tant que tuyau flexible.

11. Procédé de détermination du colmatage de sédiments, **caractérisé par** les étapes de procédé consistant à
- introduire, dans un sédiment à examiner, un élément d'injection (22) ayant une cavité (24) pour acheminer de l'eau vers une pluralité d'orifices de sortie (26) qui sont répartis régulièrement sur la circonférence extérieure et qui sont disposés au niveau de l'extrémité libre de l'élément d'injection (22) et présentent un diamètre compris entre 1 et 5 mm,
- injecter de l'eau en surpression, au moyen de l'élément d'injection (22) et des orifices de sortie (26), dans le sédiment, tout en fixant et en gardant deux paramètres du groupe comprenant
a) le volume d'eau injecté,
b) la durée de l'injection d'eau ou
c) le niveau de pression de l'injection d'eau,
- déterminer celui des paramètres a), b) ou c) qui n'a pas été fixé et gardé.

12. Procédé selon la revendication 11, **caractérisé par** une comparaison du paramètre déterminé avec des valeurs de référence de ce paramètre qui ont été déterminées auparavant pour des sédiments ayant une perméabilité définie.

13. Procédé selon la revendication 11 ou la revendication 12, **caractérisé par le fait que** le niveau de pression de l'injection d'eau est inférieur à 1 bar.
